(19) **Europäisches Patentamt**
**European Patent Office**
**Office européen des brevets**

(11) **EP 2 948 800 B1**

(12) **FASCICULE DE BREVET EUROPEEN**

(45) Date de publication et mention
de la délivrance du brevet:
**18.10.2017 Bulletin 2017/42**

(51) Int Cl.:
**G01V 5/00** (2006.01)

(21) Numéro de dépôt: **14702772.6**

(22) Date de dépôt: **21.01.2014**

(86) Numéro de dépôt international:
**PCT/EP2014/051070**

(87) Numéro de publication internationale:
**WO 2014/114608 (31.07.2014 Gazette 2014/31)**

(54) **PROCEDE DE DETECTION DE SOURCE RADIOACTIVE EN MOUVEMENT ET DISPOSITIF ASSOCIE**

VERFAHREN ZUR ERFASSUNG EINER SICH BEWEGENDEN RADIOAKTIVEN QUELLE UND ZUGEHÖRIGE VORRICHTUNG

METHOD FOR DETECTING A MOVING RADIOACTIVE SOURCE, AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.01.2013 FR 1350583**

(43) Date de publication de la demande:
**02.12.2015 Bulletin 2015/49**

(73) Titulaire: **Commissariat à l'Énergie Atomique et aux Énergies Alternatives 75015 Paris (FR)**

(72) Inventeurs:
 • **COULON, Romain**
 **F-58400 Chaulgnes (FR)**
 • **KONDRASOVS, Vladimir**
 **F-91120 Palaiseau (FR)**
 • **BOUDERGUI, Karim**
 **F-28630 Nogent-le-Phaye (FR)**
 • **BAKKALI, Mounir**
 **F-92190 Meudon (FR)**
 • **NORMAND, Stéphane**
 **F-50540 Isigny Le Buat (FR)**

(74) Mandataire: **Brevalex**
 **95, rue d'Amsterdam**
 **75378 Paris Cedex 8 (FR)**

(56) Documents cités:
 **US-A1- 2007 034 808**

 • LIJUN QIAN ET AL: "Quickest detection of nuclear radiation using a sensor network", HOMELAND SECURITY (HST), 2012 IEEE CONFERENCE ON TECHNOLOGIES FOR, IEEE, 13 novembre 2012 (2012-11-13), pages 648-653, XP032330437, DOI: 10.1109/THS.2012.6459925 ISBN: 978-1-4673-2708-4
 • VILIM R B ET AL: "Sensitivity Improvement In Low-Profile Distributed Detector Systems For Tracking Sources In Transit", TECHNOLOGIES FOR HOMELAND SECURITY, 2007 IEEE CONFERENCE ON, IEEE, PI, 1 mai 2007 (2007-05-01), pages 174-179, XP031175233, DOI: 10.1109/THS.2007.370041 ISBN: 978-1-4244-1052-1
 • ASHOK SUNDARESAN ET AL: "Distributed detection of a nuclear radioactive source using fusion of correlated decisions", INFORMATION FUSION, 2007 10TH INTERNATIONAL CONFERENCE ON, IEEE, PI, 1 juillet 2007 (2007-07-01), pages 1-7, XP031194037, ISBN: 978-0-662-45804-3 cité dans la demande

**Description**

**Domaine technique et art antérieur**

L'invention concerne un procédé de détection de source radioactive en mouvement et le dispositif associé.

L'invention trouve des applications dans de nombreux domaines et, de façon particulièrement avantageuse, dans le domaine de la sécurité.

Pour des raisons de sécurité, il est souvent nécessaire de détecter le passage éventuel d'une source radioactive à proximité d'un lieu ou se déroule un procédé industriel ou lors de la surveillance d'une infrastructure.

La sensibilité de détection d'une source radioactive est fonction du niveau d'ambiance radioactive (le bruit de fond), de l'intensité de la source et du temps de passage de cette source devant le système de détection. Il est connu de régler un seuil d'alarme par rapport au niveau des fluctuations statistiques de l'ambiance radioactive afin de déclencher un signal qui atteste la présence d'une source radioactive.

Les systèmes de détection de sources mobiles comprennent une pluralité de voies de mesure. Certains de ces systèmes réalisent la détection des sources mobiles par seuillage de chaque voie de mesure et la mesure par la sommation brute des signaux délivrés par les différentes voies de mesure à l'instant de la détection. Afin de réduire les taux de fausses alarmes, sont également connus des systèmes qui travaillent sur la base d'une détection indépendante de chaque voie de mesure et d'une corrélation des détections à posteriori (cf. « Distributed detection of a nuclear radioactive source using fusion correlation decisions » A.Sundaresan, P.K.Varshney, N.S.V Rao in Proceeding of the International Conférence on Information Fusion, 2007*).* Si cette approche permet effectivement une réduction des taux de fausses alarmes, elle ne supprime pas l'étape de seuillage conventionnelle qui limite les capacités de détection intrinsèque des détecteurs.

L'invention ne présente pas cet inconvénient. Autres systèmes de détection sont connus, par exemple LIJUN QIAN ET AL: "Quickest detection of nuclear radiation using a sensor network",HOMELAND SECURITY (HST), 2012 IEEE CONFERENCE ON TECHNOLOGIES FOR, IEEE, 13 novembre 2012 (2012-11-13), pages 648-653, DOI: 10.1109/THS.2012.6459925ISBN: 978-1-4673-2708-4 et VILIM R B ET AL: "Sensitivity Improvement In Low-Profile Distributed Detector Systems For Tracking Sources In Transit",TECHNOLOGIES FOR HOMELAND SECURITY, 2007 IEEE CONFERENCE ON, IEEE, PI, 1 mai 2007 (2007-05-01), pages 174-179, DOI: 10.1109/THS.2007.370041ISBN: 978-1-4244-1052-1.

**Exposé de l'invention**

En effet, l'invention concerne un procédé de détection de source radioactive qui se déplace sur une trajectoire linéaire sensiblement parallèle à un alignement de N détecteurs, N étant un nombre entier supérieur ou égal à 2. Le procédé comprend les étapes suivantes :

- formation de NxN$_t$ valeurs de comptage d'impulsions M$_{i,t}$ (i=1, 2, ..., N et t=1, 2, ..., N$_t$) à partir de NxN$_t$ signaux de détection délivrés par les N détecteurs sous la forme d'une succession dans le temps de N$_t$ ensembles de N signaux détectés simultanément par les N détecteurs sur une même durée $\Delta$t, une valeur de comptage d'impulsions représentant un nombre d'impulsions détectées par un détecteur sur une durée $\Delta$t, et
- calcul, à l'aide d'un calculateur :

    → d'un ensemble de N$_R$ produits de corrélation R$_z$ de façon que :

$$R_z = \prod_{i=1}^{N} M_{i,\lfloor(N-i)z+1\rfloor} \quad \text{(z=1, 2, ..., N}_R\text{)}$$

Avec : $N_R = \frac{N_t - 1}{N - 1}$, N$_t$ étant un nombre entier très grand devant N

    → d'une moyenne statistique *R* des N$_t$ produits $\prod_{i=1}^{N} M_{i,t}$ telle que :

$$\bar{R} = \frac{1}{N_t} \sum_{t=1}^{N_t} \prod_{i=1}^{N} M_{i,t}$$

→ d'un écart-type $\sigma(\bar{R})$ des $N_t$ produits $\prod_{i=1}^{N} M_{i,t}$ tel que:

$$\sigma(\bar{R}) = \sqrt{\frac{1}{N_t} \sum_{t=1}^{N_t} \left( \bar{R} - \prod_{i=1}^{N} M_{i,t} \right)^2}$$

→ d'une condition de corrélation pour chaque produit de corrélation $R_z$ de façon que :

si $R_z \geq \bar{R} + K_2\sigma(\bar{R})$, $K_2$ étant un scalaire, il est considéré qu'une source radioactive s'est déplacée devant les détecteurs, et
si $R_z < \bar{R} + K_2\sigma(\bar{R})$, il est considéré qu'aucune source ne s'est déplacée devant les détecteurs.

Comme mentionné ci-dessus, le nombre $N_R$ de produits de corrélation s'exprime par l'équation :

$$N_R = \frac{N_t - 1}{N - 1},$$

où N est le nombre de détecteurs et $N_t$ le nombre d'ensembles de N signaux détectés simultanément par les N détecteurs sur une même durée $\Delta t$. Les nombres $N_R$, $N_t$ et N sont tous des nombres entiers. Il est en conséquence clair que, pour un nombre N donné de détecteurs, le nombre $N_t$ est choisi de sorte que $N_R$ soit également un nombre entier. A titre d'exemple non limitatif, pour un nombre N de détecteurs égal à 10, le nombre $N_t$ peut être égal 10000, ce qui induit un nombre $N_R$ égal à 1111.

Il ressort également de la formule du produit de corrélation $R_z$ que toutes les mesures effectuées sur la durée $\Delta t$ ne sont pas utilisés pour calculer le produit $R_z$. C'est un avantage de l'invention que de ne pas utiliser toutes les mesures effectuées, mais seulement les mesures utiles à la formation du résultat recherché.

Selon une caractéristique supplémentaire de l'invention, dès lors qu'il est considéré qu'une source radioactive s'est déplacée devant les détecteurs, il est calculé la vitesse V de la source de façon que :

$$V = d/(T \times \Delta t),$$

où d est la distance qui sépare deux détecteurs voisins et T est le rang t d'un ensemble de N valeurs de comptage d'impulsions pour lequel le produit de corrélation $R_t$ est maximal.

Selon une autre caractéristique supplémentaire de l'invention, dès lors qu'il est considéré qu'une source radioactive s'est déplacée devant les détecteurs, il est calculé l'intensité I de la source de façon que :

$$I = \frac{1}{N} \sum_{i=1}^{N} M_{i,(N-i)T+1} - \frac{1}{N \times N_t} \sum_{t=1}^{N_t} \left[ \sum_{i=1}^{N} M_{i,t} \right]$$

Dans un mode de réalisation particulier de l'invention, les valeurs de comptage d'impulsions sont lissées avant l'étape de calcul mise en oeuvre par le calculateur.

L'invention concerne également un dispositif de détection de source radioactive qui se déplace sur une trajectoire sensiblement linéaire, caractérisé en ce qu'il comprend des moyens pour mettre en oeuvre le procédé de l'invention.

## Brève description des figures

D'autres caractéristiques et avantages de l'invention apparaîtront à la lecture de la description qui va suivre, faite en référence aux figures jointes, parmi lesquelles :

-    La figure 1 représente, de façon symbolique, une source radioactive qui se déplace devant un ensemble de détecteurs du dispositif de détection de source radioactive en mouvement de l'invention ;

- La figure 2 représente le schéma de principe d'un exemple de dispositif de détection de source radioactive en mouvement de l'invention ;
- La figure 3 représente un procédé de traitement qui participe au procédé de détection de source radioactive en mouvement de l'invention ;
- Les figures 4A et 4B illustrent le procédé de détection de source radioactive de l'invention dans le cas d'une source radioactive de faible intensité et de faible vitesse ;
- Les figures 5A et 5B illustrent le procédé de détection de source radioactive de l'invention dans le cas d'une source radioactive de faible intensité et de vitesse élevée ;
- La figure 6 représente le taux de fausse alarme en fonction du nombre de détecteurs utilisés, pour un dispositif de l'invention et pour un dispositif de l'art antétieur ;
- La figure 7 représente le taux de non-détection d'une source radioactive en fonction du nombre de détecteurs utilisés, pour un dispositif de l'invention et pour un dispositif de l'art antérieur ;
- La figure 8 représente le taux de détection d'une source radioactive en fonction de l'intensité du signal émis par la source, pour un dispositif de l'invention et pour un dispositif de l'art antérieur ;
- Les figures 9A et 9B représentent, chacune, l'intensité mesurée de deux sources radioactives d'intensité différente, en fonction du nombre de détecteurs, pour un dispositif de l'invention et pour un dispositif de l'art antérieur.

## Exposé de modes de réalisation particuliers de l'invention

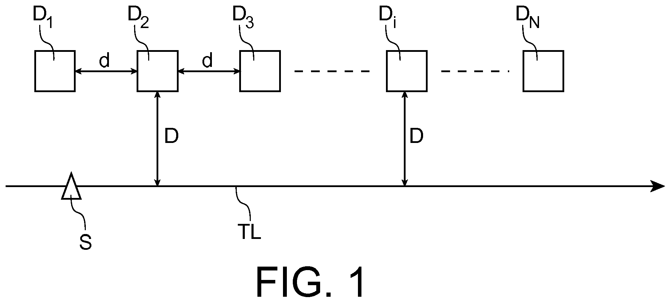

La figure 1 représente, de façon symbolique, une source radioactive qui se déplace devant un ensemble de détecteurs.

La source radioactive S que l'on cherche à détecter se déplace -a priori-sur une trajectoire linéaire TL (route / tapis roulant / etc.). Les N détecteurs $D_1$, $D_2$, ..., $D_i$, ..., $D_N$ du dispositif de détection sont alignés parallèlement à la trajectoire TL. Une distance d sépare deux détecteurs voisins et une distance D sépare chaque détecteur $D_i$ (i=1, 2, ..., N) de la trajectoire TL.

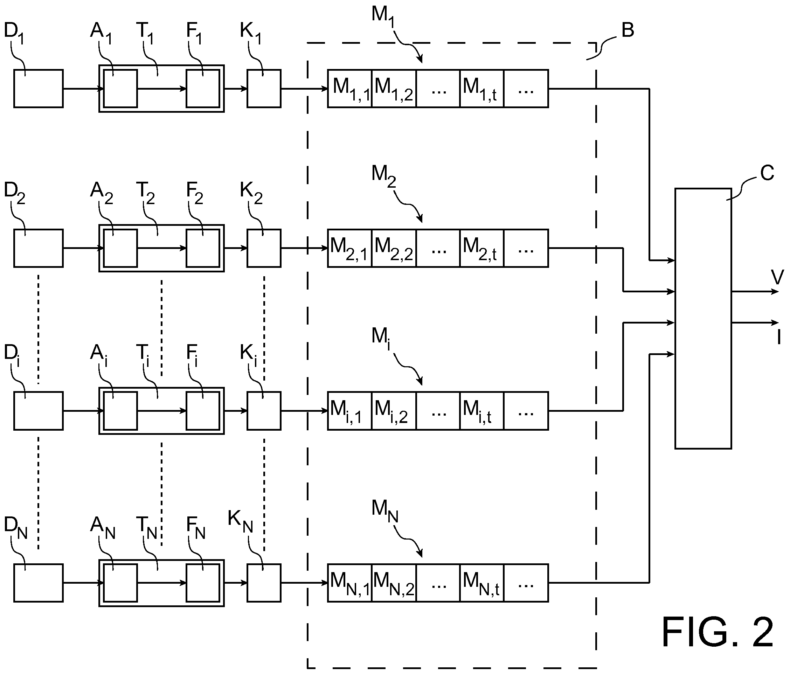

La figure 2 représente le schéma de principe d'un exemple de dispositif de détection qui met en oeuvre le procédé de détection de source radioactive en mouvement de l'invention.

Le dispositif comprend N détecteurs $D_i$ (i=1, 2, ..., N), N circuits de traitement $T_i$, N circuits de comptage d'impulsions $K_i$, un bloc mémoire B constitué de N mémoires FIFO $M_i$ (FIFO pour « First In First Out ») et un calculateur C.

Chaque détecteur $D_i$ (i=1, 2, ..., N) qui détecte un rayonnement incident délivre un signal impulsionnel. Le signal impulsionnel délivré par le détecteur $D_i$ est ensuite traité par un circuit de traitement $T_i$, lequel comprend, par exemple, un amplificateur $A_i$ et un circuit de filtrage $F_i$. Chaque circuit de traitement $T_i$ délivre une impulsion électronique. Les impulsions électroniques délivrées par un circuit de traitement $T_i$ sont comptées par un circuit de comptage $K_i$. Le comptage des impulsions électroniques s'effectue par tranches de temps successives de durée $\Delta t$. Les valeurs de comptage qui sont délivrées par le compteur $K_i$ sont transmises à la mémoire FIFO $M_i$. Une mémoire FIFO $M_i$ contient en conséquence une succession de valeurs de comptage $M_{i,1}$, $M_{i,2}$, ... $M_{i,t}$, etc., où t est l'indice de position temporelle des valeurs de comptage dans l'historique des mémoires FIFO.

Selon le principe connu qui régit les mémoires FIFO, dès lors qu'une mémoire FIFO est pleine, la valeur de comptage la plus ancienne qui est stockée dans la mémoire est extraite pour permettre le stockage d'une nouvelle valeur de comptage. Les valeurs de comptage qui sont extraites simultanément des différentes mémoire $M_i$ sont alors transmises au calculateur C. Dans un mode de réalisation particulier de l'invention (non représenté sur la figure), les valeurs de comptage sont lissées par un circuit de lissage avant d'être transmises à la mémoire FIFO.

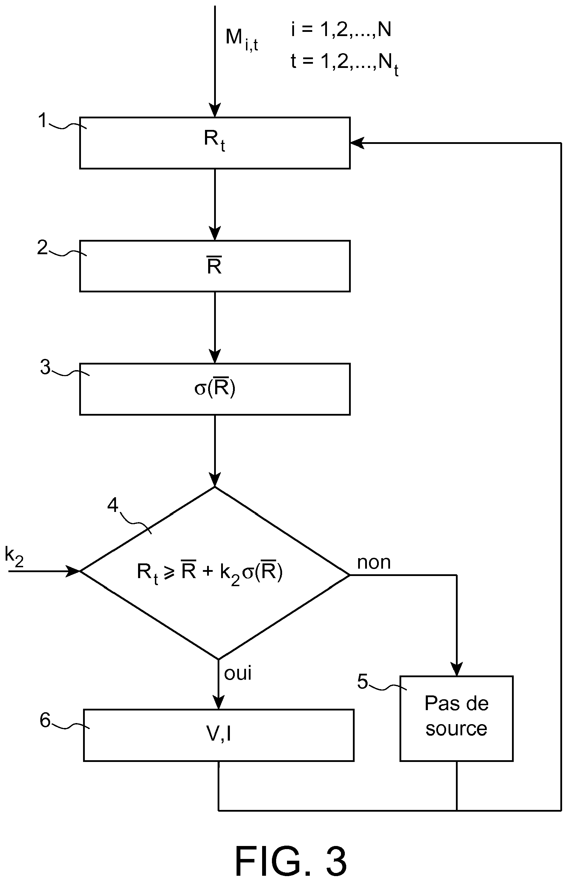

Le calculateur C met en oeuvre un procédé de traitement des valeurs de comptage $M_{i,t}$. La figure 3 illustre ce procédé de traitement.

Dans une première étape (étape 1), le calculateur C calcule $N_R$ produits de corrélation $R_z$ (z=1, 2, ..., $N_R$) tels que : $R_Z = \prod_{i=1}^{N} M_{[i,(N-i)z+1]+}$, avec $N_R = \frac{N_t - 1}{N-1}$, $N_t$ étant un nombre entier très grand devant N,

La moyenne statistique $\overline{R}$ des $N_t$ produits $\prod_{i=1}^{N} M_{i,t}$ est ensuite calculée (étape 2) :

$$\overline{R} = \frac{1}{N_t} \sum_{t=1}^{N_t} \prod_{i=1}^{N} M_{i,t}$$

Puis, l'écart-type $\sigma(\overline{R})$ des $N_t$ produits $\prod_{i=1}^{N} M_{i,t}$ est alors calculé (étape 3) :

$$\sigma(\bar{R}) = \sqrt{\frac{1}{N_t} \sum_{t=1}^{N_t} \left( \bar{R} - \prod_{i=1}^{N} M_{i,t} \right)^2}$$

Une fois l'écart-type calculé, il est vérifié s'il existe une corrélation significative des séries temporelles parmi les valeurs de $R_t$ (étape 4). Il est ainsi vérifié si oui ou non l'inéquation suivante est réalisée :

$$R_z \geq \bar{R} + K_2 \sigma(\bar{R})$$

où la grandeur $K_2$ est un scalaire choisi en rapport avec le taux de fausse alarme souhaité pour la détection. L'ordre de grandeur de $K_2$ est de quelques unités.

Si l'inéquation ci-dessus n'est pas réalisée, il est considéré qu'aucune source ne s'est déplacée devant les détecteurs (étape 5 : pas de source) .

Si l'inéquation ci-dessus est réalisée, il est considéré qu'une source s'est déplacée devant les détecteurs et sa vitesse V et/ou son intensité I (nombre de coups par seconde) sont calculées (étape 6).

Parmi les valeurs de $R_t$, il existe une valeur de $R_t$ qui est maximale. Soit T est le rang t pour lequel la valeur de $R_t$ est maximale, il vient alors :

$$V = d/(T \times \Delta t),$$

où d est la distance qui sépare deux détecteurs voisins, et

$$I = \frac{1}{N} \sum_{i=1}^{N} M_{i,(N-i)T+1} - \frac{1}{N \times N_t} \sum_{t=1}^{N_t} \left[ \sum_{i=1}^{N} M_{i,t} \right]$$

Dès lors que les étapes 5 et 6 sont effectuées, un nouveau cycle de calcul est lancé (retour à l'étape 1).

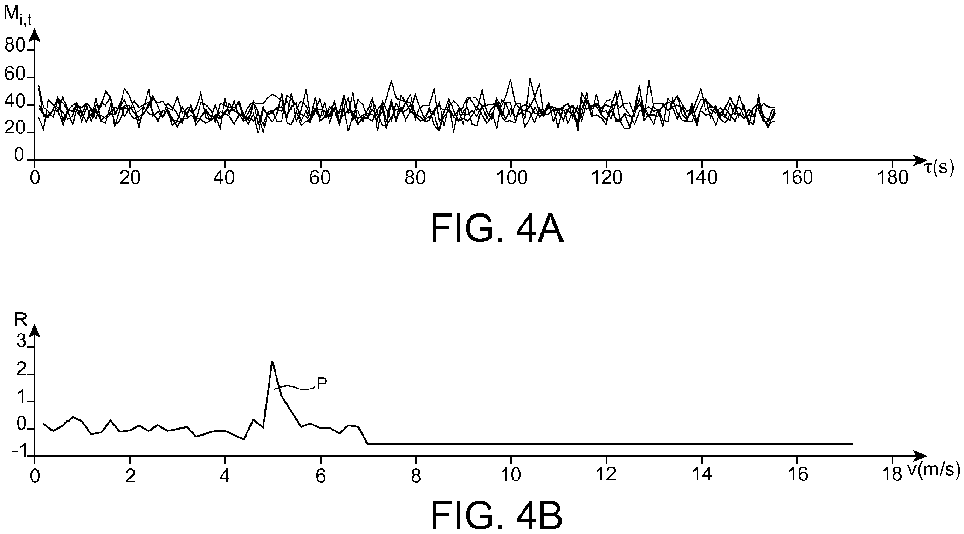

Les figures 4A et 4B illustrent le procédé de détection de source radioactive de l'invention dans le cas d'une source radioactive de faible intensité et de vitesse faible.

Les résultats illustrés sur les figures 4A et 4B sont obtenus pour un dispositif de détection constitués de cinq détecteurs. Une source radioactive de faible intensité se déplace à la vitesse de 5m/s devant les détecteurs.

La figure 4A représente les valeurs de comptage $M_{i,t}$ (i=1, 2, ..., 5) associées à chacun des cinq détecteurs qui participent au dispositif de détection de l'invention, en fonction du temps τ. En référence aux grandeurs t et Δt définies précédemment, il vient :

$$\tau = t \times \Delta t$$

La figure 4B représente le produit de corrélation R calculé en fonction d'une vitesse v représentative de la vitesse de la source. En référence aux grandeurs d, t et Δt définies précédemment, il vient :

$$v = d/t \times \Delta t$$

Il peut être constaté que le produit de corrélation fait bien apparaître un pic P à une vitesse sensiblement égale à 5m/s.

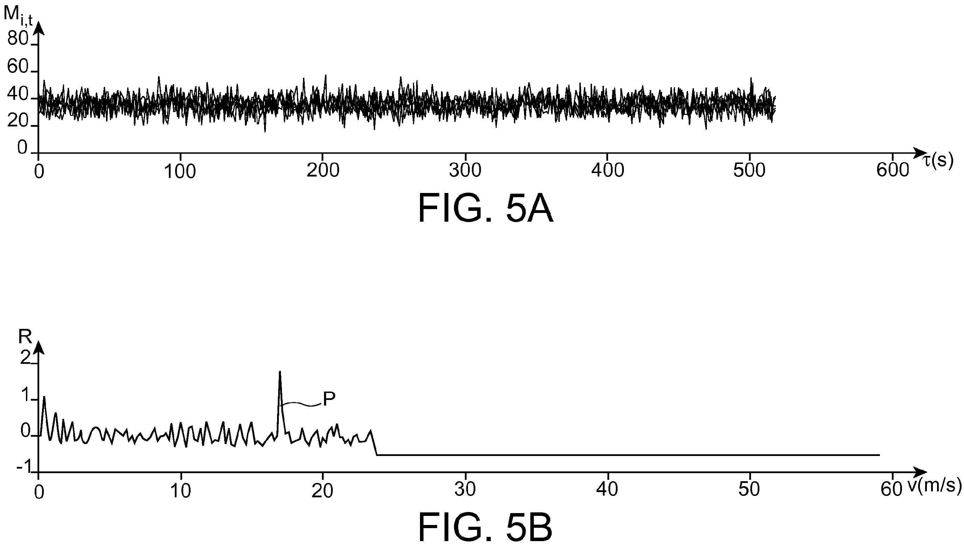

Les figures 5A et 5B illustrent le procédé de détection de source radioactive de l'invention dans le cas d'une source radioactive de faible intensité et de vitesse élevée.

Les figures 5A et 5B correspondent respectivement aux figures 4A et 4B précédentes. La vitesse de la source qui se déplace devant les détecteurs est ici égale à 17m/s. Il peut effectivement être constaté un pic de corrélation P à une vitesse sensiblement égale à 17m/s.

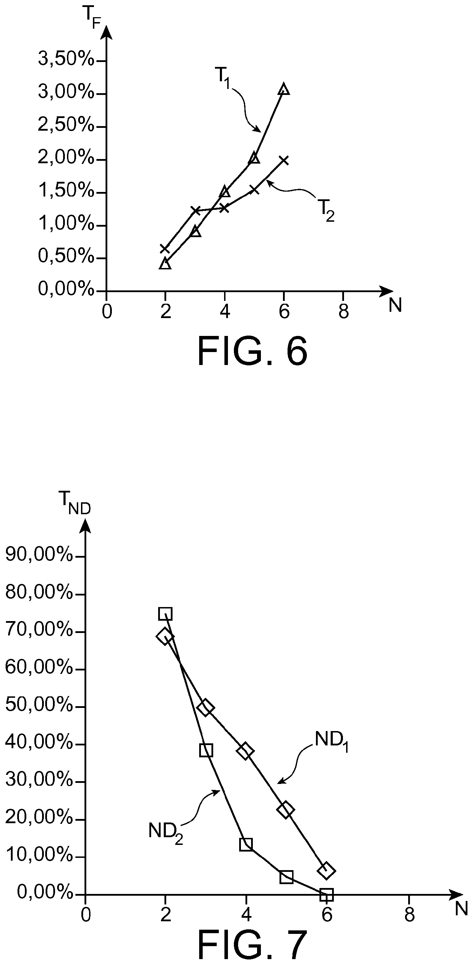

La figure 6 illustre le taux de fausse alarme $T_F$ en fonction du nombre de détecteurs N, pour un dispositif de détection par seuillage conforme à l'art antérieur (courbe $T_1$) et pour un dispositif de détection par corrélation conforme à l'invention (courbe $T_2$), toutes choses étant égales par ailleurs. De façon très avantageuse, il est possible de constater que, au-delà de trois détecteurs, le taux de fausse alarme est très sensiblement plus faible avec le dispositif de détection de l'invention.

La figure 7 illustre le taux de non-détection $T_{ND}$ en fonction du nombre de détecteurs N, pour un dispositif de détection par seuillage conforme à l'art antérieur (courbe $ND_1$) et pour un dispositif de détection par corrélation conforme à l'invention (courbe $ND_2$), toutes choses étant égales par ailleurs. De façon très avantageuse également, il est possible de constater que le taux de non-détection est très sensiblement plus faible avec le dispositif de détection de l'invention.

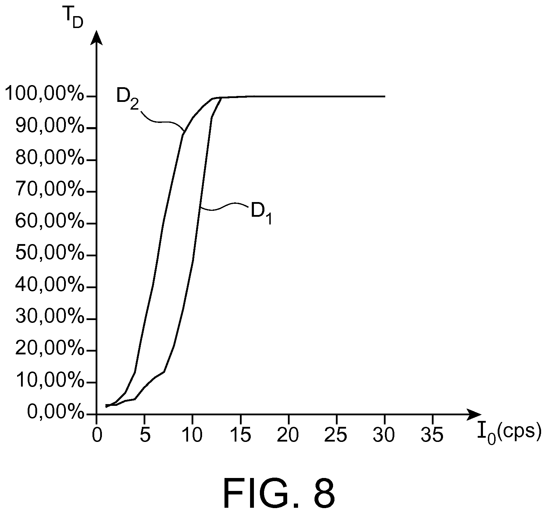

La figure 8 illustre le taux de détection $T_D$ en fonction de l'intensité $I_0$ du signal (exprimée en taux de comptage ou nombre de coups par seconde (cps)), entre un dispositif de détection par seuillage conforme à l'art antérieur et un dispositif de détection par corrélation conforme à l'invention. Dans chaque cas, le dispositif de détection comprend six détecteurs. La courbe $D_1$ représente le taux de détection du dispositif de l'art antérieur et la courbe $D_2$ représente le taux de détection du dispositif de l'invention. De façon particulièrement avantageuse, il apparaît que le taux de détection du dispositif de l'invention est toujours très sensiblement supérieur à celui du dispositif de l'art antérieur pour un taux de comptage compris entre 2 et 13 cps, les deux taux de détection étant égaux au-delà du taux de comptage de 13 cps.

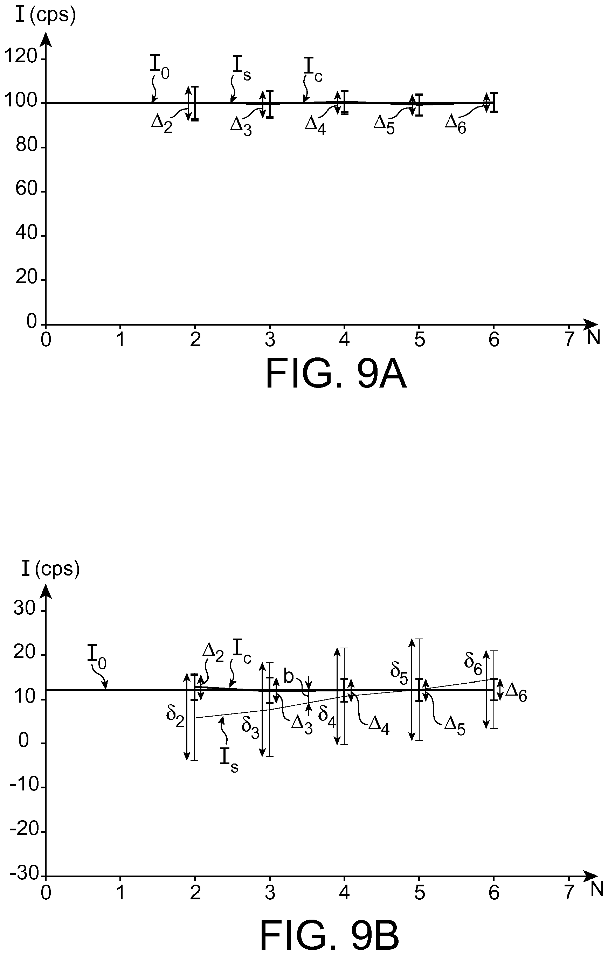

La figure 9A représente l'intensité mesurée d'une source radioactive de forte intensité en fonction du nombre N de détecteurs, pour un dispositif de détection par seuillage conforme à l'art antérieur et pour un dispositif de détection par corrélation conforme à l'invention. L'intensité $I_0$ de la source est, par exemple, égale à 100 coups par seconde. Il apparaît que l'intensité $I_s$ mesurée par le dispositif de l'art antérieur et l'intensité $I_c$ mesurée par le dispositif de l'invention sont identiques et égales à $I_0$, quel que soit le nombre de détecteurs. L'imprécision sur la mesure qui est représentée par les intervalles (i=1, 2, ..., 6) sur la figure 9A est également identique pour les deux dispositifs de détection.

La figure 9B représente l'intensité mesurée d'une source radioactive de faible intensité en fonction du nombre N de détecteurs, pour un dispositif de détection par seuillage conforme à l'art antérieur et pour un dispositif de détection par corrélation conforme à l'invention. L'intensité $I_0$ de la source est, par exemple, égale à 12 coups par seconde. Il apparaît que l'intensité $I_c$ mesurée par le dispositif de l'invention est très sensiblement égale à l'intensité émise $I_0$ quel que soit le nombre de détecteurs. Par contre, l'intensité $I_s$ mesurée par le dispositif de l'art antérieur est très différente de l'intensité émise $I_0$. De même, alors que l'imprécision sur les mesures relevées par le dispositif de l'invention est relativement faible, l'imprécision $\delta_i$ sur les mesures relevées par le dispositif de l'art antérieur est élevée. Par ailleurs, il apparaît un biais b sur les mesures relevées par le dispositif de l'art antérieur, ce qui n'est pas le cas des mesures relevées par le dispositif de l'invention.

## Revendications

1.  Procédé de détection de source radioactive qui se déplace sur une trajectoire linéaire sensiblement parallèle à un alignement de N détecteurs, N étant un nombre entier supérieur ou égal à 2, **caractérisé en ce qu'**il comprend les étapes suivantes :

    - formation de $N \times N_t$ valeurs de comptage d'impulsions $M_{i,t}$ (i=1, 2, ..., N et t=1, 2, ..., $N_t$) à partir de $N \times N_t$ signaux de détection délivrés par les N détecteurs sous la forme d'une succession dans le temps de $N_t$ ensembles de N signaux détectés simultanément par les N détecteurs sur une même durée $\Delta t$, une valeur de comptage d'impulsions représentant un nombre d'impulsions détectées par un détecteur sur une durée $\Delta t$, $N_t$ étant un nombre entier très grand devant N, le nombre $N_t$ étant choisi de sorte que le nombre $N_R$ défini comme

    $N_R = \frac{N_t - 1}{N - 1}$ soit également un nombre entier, et
    - calcul, à l'aide d'un calculateur :

        → d'un ensemble de $N_R$ produits de corrélation $R_z$ de façon que :

$$R_z = \prod_{i=1}^{N} M_{i,[(N-i)z+1]} \quad (z=1, 2, ..., N_R)$$

d'une moyenne statistique $\overline{R}$ des $N_t$ produits $\prod_{i=1}^{N} M_{i,t}$ telle que :

$$\bar{R} = \frac{1}{N_t} \sum_{t=1}^{N_t} \prod_{i=1}^{N} M_{i,t}$$

d'un écart-type $\sigma(\bar{R})$ des $N_t$ produits $\prod_{i=1}^{N} M_{i,t}$

→ d'une condition de corrélation pour chaque produit de corrélation $R_z$ de façon que :

si $R_z \geq \bar{R} + K_2\sigma(\bar{R})$, $K_2$ étant un scalaire, il est considéré qu'une source radioactive s'est déplacée devant les détecteurs, et
si $R_z < \bar{R} + K_2\sigma(\bar{R})$, il est considéré qu'aucune source ne s'est déplacée devant les détecteurs.

2. Procédé selon la revendication 1, dans lequel, dès lors qu'il est considéré qu'une source radioactive s'est déplacée devant les détecteurs, il est calculé, par un calculateur, une vitesse V de la source radioactive de façon que :

$$V = d/(T \times \Delta t),$$

où d est la distance qui sépare deux détecteurs voisins et T est le rang t d'un ensemble de N valeurs de comptage d'impulsions pour lequel le produit de corrélation $R_z$ est maximal.

3. Procédé selon la revendication 1 ou 2, dans lequel, dès lors qu'il est considéré qu'une source radioactive s'est déplacée devant les détecteurs, il est calculé par un calculateur, une intensité I de la source radioactive de façon que :

$$I = \frac{1}{N} \sum_{i=1}^{N} M_{i,(N-i)T+1} - \frac{1}{N \times N_t} \sum_{t=1}^{N_t} \left[ \sum_{i=1}^{N} M_{i,t} \right]$$

4. Procédé selon l'une quelconque des revendications 1 à 3, dans lequel les valeurs de comptage d'impulsions sont lissées avant l'étape de calcul.

5. Dispositif de détection de source radioactive qui se déplace sur une trajectoire sensiblement linéaire, **caractérisé en ce qu'**il comprend :

- N détecteurs ($D_i$, i=1, 2, ..., N) sensiblement alignés parallèlement à la trajectoire linéaire de la source radioactive, N étant un nombre entier supérieur ou égal à 2, les N détecteurs délivrant simultanément N signaux de détection sur une même durée $\Delta t$,
- N circuits de traitement ($T_i$, i=1, 2, ..., N) reliés au N détecteurs, chaque circuit de traitement étant apte à délivrer un signal électronique correspondant à un signal de détection délivré par un détecteur différent,
- N circuits de comptage ($K_i$, i=1, 2, ..., N) reliés au N circuits de traitement, chaque circuit de comptage étant apte à compter, pendant $N_t$ durées de comptage successives $\Delta t$, un nombre d'impulsions électroniques délivrées par un circuit de traitement différent et à délivrer, pour chaque durée de comptage $\Delta t$, une valeur de comptage d'impulsions ($M_{i,t}$) (t=1, 2, ..., $N_t$), $N_t$ étant un nombre entier très grand devant N, le nombre $N_t$ étant choisi de sorte que le nombre $N_R$ défini comme $N_R = \frac{N_t - 1}{N - 1}$ soit également un nombre entier,
- un bloc mémoire (B) apte à mémoriser les NxN$_t$ valeurs de comptage d'impulsions délivrées par les N circuits de comptage pendant les Nt durées de comptage successives, et
- un calculateur qui effectue les étapes suivantes :

→ calcul d'un ensemble de $N_R$ produits de corrélation $R_z$ de façon que :

$$R_z = \prod_{i=1}^{N} M_{i,([N-i]z+1]} \quad (z=1, 2, ..., N_R)$$

→ calcul d'une moyenne statistique $\bar{R}$ des $N_t$ produits $\prod_{i=1}^{N} M_{i,t}$ telle que :

$$\bar{R} = \frac{1}{N_t} \sum_{t=1}^{N_t} \prod_{i=1}^{N} M_{i,t}$$

→ calcul d'un écart-type $\sigma(\bar{R})$ des $N_t$ produits $\prod_{i=1}^{N} M_{i,t}$

→ calcul d'une condition de corrélation pour chaque produit de corrélation $R_z$ de façon que :

si $R_z \geq \bar{R} + K_2\sigma(\bar{R})$, $K_2$ étant un scalaire, il est considéré qu'une source radioactive s'est déplacée devant les détecteurs, et

si $R_z < R + K_2\sigma(\bar{R})$, il est considéré qu'aucune source ne s'est déplacée devant les détecteurs.

6. Dispositif selon la revendication 5, dans lequel :

$$\text{si } R_z \geq \bar{R} + K_2\sigma(\bar{R}),$$

le calculateur effectue une étape de calcul de vitesse V de la source de sorte que :

$$V = d/(T \times \Delta t),$$

où d est la distance qui sépare deux détecteurs voisins et T est le rang t d'un ensemble de N valeurs de comptage d'impulsions pour laquelle le produit de corrélation $R_z$ est maximal.

7. Dispositif selon l'une quelconque des revendications 5 ou 6, dans lequel :

$$\text{si } R_z \geq \bar{R} + K_2\sigma(\bar{R}),$$

le calculateur effectue une étape de calcul d'intensité I de la source de sorte que :

$$I = \frac{1}{N} \sum_{i=1}^{N} M_{i,(N-i)T+1} - \frac{1}{N \times N_t} \sum_{t=1}^{N_t} \left[ \sum_{i=1}^{N} M_{i,t} \right]$$

**Patentansprüche**

1. Verfahren zum Erfassen einer radioaktiven Quelle, die sich auf einer linearen Bahn im Wesentlichen parallel zu einer Aneinanderreihung von N Detektoren verlagert, wobei N eine ganze Zahl größer oder gleich 2 ist, **dadurch gekennzeichnet, dass** es die nachfolgenden Schritte umfasst:

- Bilden von $N \times N_t$ Impulszählwerten $M_{i,t}$ (i = 1, 2, ..., N und t = 1, 2, , ..., $N_t$) ausgehend von $N \times N_t$ Erfassungssignalen, die von den N Detektoren in Form von einer zeitlichen Folge von $N_t$ Gruppen von N Signalen ausgegeben werden, die gleichzeitig von den N Detektoren über eine gleiche Zeitdauer $\Delta t$ erfasst werden, wobei ein Impulszählwert eine Anzahl von Impulsen darstellt, die von einem Detektor über eine Zeitdauer $\Delta t$ erfasst werden, wobei $N_t$ eine sehr große ganze Zahl vor N ist, wobei die Anzahl $N_t$ so ausgewählt ist, dass die als

$$N_R = \frac{N_t - 1}{N - 1}$$ definierte Zahl $N_R$ auch eine ganze Zahl ist, und

- mit Hilfe von einem Rechner Berechnen von:

→ einer Gruppe von $N_R$ Korrelationsproduktion $R_z$, so dass

$$R_z = \prod_{i=1}^{N} M_{i,([N-i)z+1]} \quad (z=1, 2, ..., N_R)$$

→ eines statistischen Mittelwerts $\overline{R}$ von $N_t$ Produkten $\prod_{i=1}^{N} M_{i,t}$, so dass

$$\overline{R} = \frac{1}{N_t} \sum_{t=1}^{N_t} \prod_{i=1}^{N} M_{i,t}$$

→ einer Standardabweichung $\sigma(\overline{R})$ von $N_t$ Produkten $\prod_{i=1}^{N} M_{i,t}$,

→ einer Korrelationsbedingung für jedes Korrelationsprodukt $R_z$, so dass:

dann, wenn $R_z \geq \overline{R} + K_2\, \sigma(\overline{R})$, wobei $K_2$ ein Skalar ist, erachtet wird, dass eine radioaktive Quelle sich an den Detektoren vorbei verlagert hat, und

dann, wenn $R_z < \overline{R} + K_2\, \sigma(\overline{R})$, erachtet wird, dass sich keine Quelle an den Detektoren vorbei verlagert hat.

2. Verfahren nach Anspruch 1, wobei dann, wenn erachtet wird, dass eine radioaktive Quelle sich an den Detektoren vorbei verlagert hat, mit einem Rechner eine Geschwindigkeit V der radioaktiven Quelle berechnet wird, so dass:

$$V = d/(T \times \Delta t),$$

worin d der Abstand ist, der zwei benachbarte Detektoren trennt und T der Rang t einer Gruppe von N Impulszählwerten ist, bei dem das Korrelationsprodukt $R_z$ maximal ist.

3. Verfahren nach Anspruch 1 oder 2, wobei dann, wenn erachtet wird, dass eine radioaktive Quelle sich an den Detektoren vorbei verlagert hat, mit einem Rechner eine Intensität I der radioaktiven Quelle berechnet wird, so dass:

$$I = \frac{1}{N} \sum_{i=1}^{N} M_{i,(N-i)T+1} - \frac{1}{N \times N_t} \sum_{t=1}^{N_t} \left[ \sum_{i=1}^{N} M_{i,t} \right]$$

4. Verfahren nach einem der Ansprüche 1 bis 3, wobei die Impulszählwerte vor dem Schritt des Berechnens geglättet werden.

5. Vorrichtung zum Erfassen einer radioaktiven Quelle, die sich auf einer im Wesentlichen linearen Bahn verlagert, **dadurch gekennzeichnet, dass** sie umfasst:

- N Detektoren ($D_i$, i = 1, 2, ..., N), die im Wesentlichen parallel zur linearen Bahn der radioaktiven Quelle ausgerichtet sind, wobei N eine ganze Zahl größer oder gleich 2 ist, wobei die N Detektoren gleichzeitig N Erfassungssignale über eine gleiche Zeitdauer $\Delta t$ ausgeben,
- N Verarbeitungsschaltkreise ($T_i$, i = 1, 2, ..., N), die mit den N Detektoren verbunden sind, wobei jeder Verarbeitungsschaltkreis dazu geeignet ist, eine elektronisches Signal auszugeben, das einem von einem anderen Detektor ausgegebenen Erfassungssignal entspricht,
- N Zählschaltkreise ($K_i$, i = 1, 2, ..., N), die mit N Verarbeitungsschaltkreisen verbunden sind, wobei jeder Zählschaltkreis dazu geeignet ist, während $N_t$ aufeinanderfolgenden Zähldauern $\Delta t$ eine Anzahl von elektronischen Impulsen zu zählen, die von einem anderen Verarbeitungsschaltkreis ausgegeben werden, und für jede Zähldauer $\Delta t$ einen Impulszählwert ($M_{i,t}$) (t = 1, 2, ..., $N_t$) auszugeben, wobei $N_t$ eine sehr große ganze Zahl vor N ist, wobei die Anzahl $N_t$ so ausgewählt ist, dass die als $N_R = \frac{N_t - 1}{N - 1}$ definierte Zahl $N_R$ auch eine ganze Zahl ist,
- einen Speicherblock (B), der dazu geeignet ist, die $N \times N_t$ Impulszählwerte abzuspeichern, die von den N Zählschaltkreisen während der Nt aufeinanderfolgenden Zähldauern ausgegeben werden, und
- einen Rechner, der nachfolgende Schritte durchführt:

→ Berechnen einer Gruppe von $N_R$ Korrelationsproduktion $R_z$, so dass

$$R_z = \prod_{i=1}^{N} M_{i,([N-i)z+1]} \quad (z=1, 2, ..., N_R)$$

→ Berechnen eines statistischen Mittelwerts $\overline{R}$ von $N_t$ Produkten $\prod_{i=1}^{N} M_{i,t}$, so dass:

$$\overline{R} = \frac{1}{N_t} \sum_{t=1}^{N_t} \prod_{i=1}^{N} M_{i,t}$$

→ Berechnen einer Standardabweichung $\sigma(\overline{R})$ von $N_t$ Produkten $\prod_{i=1}^{N} M_{i,t}$,
→ Berechnen einer Korrelationsbedingung für jedes Korrelationsprodukt $R_z$, so dass:

dann, wenn $R_z \geq \overline{R} + K_2 \, \sigma(\overline{R})$, wobei $K_2$ ein Skalar ist, erachtet wird, dass eine radioaktive Quelle sich an den Detektoren vorbei verlagert hat, und
dann, wenn $R_z < \overline{R} + K_2 \, \sigma(\overline{R})$, erachtet wird, dass sich keine Quelle an den Detektoren vorbei verlagert hat.

6. Vorrichtung nach Anspruch 5, wobei dann, wenn

$$R_z \geq \overline{R} + K_2 \, \sigma(\overline{R}),$$

der Rechner einen Schritt des Berechnens einer Geschwindigkeit V der Quelle durchführt, so dass:

$$V = d/(T \times \Delta t),$$

worin d der Abstand ist, der zwei benachbarte Detektoren trennt und T der Rang t einer Gruppe von N Impulszählwerten ist, bei dem das Korrelationsprodukt $R_Z$ maximal ist.

7. Vorrichtung nach einem der Ansprüche 5 oder 6, wobei dann, wenn

$$R_z \geq \overline{R} + K_2 \, \sigma(\overline{R}),$$

der Rechner einen Schritt des Berechnens einer Intensität I der Quelle durchführt, so dass:

$$I = \frac{1}{N} \sum_{i=1}^{N} M_{i,(N-i)T+1} - \frac{1}{N \times N_t} \sum_{t=1}^{N_t} \left[ \sum_{i=1}^{N} M_{i,t} \right]$$

**Claims**

1. A method for detecting a radioactive source moving on a linear path substantially parallel to an alignment of N detectors, N being an integer equal to or greater than 2, **characterised in that** it comprises the following steps:

- forming $NxN_t$ pulse counting values $M_{i,t}$ (i=1, 2, ..., N and t=1, 2, ..., $N_t$) from $NxN_t$ detection signals delivered by the N detectors in the form of a succession over time of $N_t$ sets of N signals simultaneously detected by the N detectors over a same duration $\Delta t$, a pulse counting value representing a number of pulses detected by a detector over a duration $\Delta t$, $N_t$ being a very large integer ahead of N, the number $N_t$ being chosen so that the number $N_R$ defined as $N_R = \frac{N_t-1}{N-1} N_R$ is also an integer, and

- computing, using a computer:

→ a set of $N_R$ correlation products $R_z$ so that:

$$R_z = \prod_{i=1}^{N} M_{i,[(N-i)z+1]} \quad (z=1, 2, ..., N_R)$$

→ a statistical mean $\overline{R}$ of the $N_t$ products $\prod_{i=1}^{N} M_{i,t}$ such that:

$$\overline{R} \;=\; \frac{1}{N_t} \sum_{t=1}^{N_t} \prod_{i=1}^{N} M_{i,t}$$

→ a standard deviation $\sigma(\overline{R})$ of the $N_t$ products $\prod_{i=1}^{N} M_{i,t}$,

→ a correlation condition for each correlation product $R_z$ so that:

  if $R_z \geq \overline{R} + K_2\sigma(\overline{R})$, $K_2$ being a scalar, a radioactive source is considered to have moved in front of the detectors, and
  if $R_z < \overline{R} + K_2\sigma(\overline{R})$, no source is considered to have moved in front of the detectors.

2. The method according to claim 1, wherein, as soon as a radioactive source is considered to have moved in front of the detectors, a speed V of the radioactive source is computed by a computer so that:

$$V = d/(T \times \Delta t),$$

where d is the distance separating two neighbouring detectors and T is the rank t of a set of N pulse counting values for which the correlation product $R_z$ is maximum.

3. The method according to claim 1 or 2, wherein, as soon as a radioactive source is considered to have moved in front of the detectors, an intensity I of the radioactive source is computed by a computer so that:

$$I = \frac{1}{N} \sum_{i=1}^{N} M_{i,(N-i)T+1} - \frac{1}{N \times N_t} \sum_{t=1}^{N_t} \left[ \sum_{i=1}^{N} M_{i,t} \right]$$

4. The method according to any of claims 1 to 3, wherein the pulse counting values are smoothed before the computing step.

5. A device for detecting a radioactive source moving over a substantially linear path, **characterised in that** it comprises:

- N detectors ($D_i$, i=1, 2, ..., N) substantially aligned parallel to the linear path of the radioactive source, N being an integer equal to or greater than 2, the N detectors simultaneously delivering N detection signals over a same duration $\Delta t$,
- N processing circuits ($T_i$, i=1, 2, ..., N) connected to the N detectors, each processing circuit being able to deliver an electronic signal corresponding to a detection signal delivered by a different detector,
- N counting circuits ($K_i$, i=1, 2, ..., N) connected to the N processing circuits, each counting circuit being able to count, during $N_t$ successive counting durations $\Delta t$, $N_t$ being a very large integer ahead of N, a number of electronic pulses delivered by a different processing circuit and to deliver, for each counting duration $\Delta t$, a pulse counting value ($M_{i,t}$) (t=1, 2, ..., $N_t$), $N_t$ being a very large integer ahead of N, the number $N_t$ being chosen so that the number $N_R$ defined as $N_R = \frac{N_t - 1}{N - 1}$ is also an integer,

- a memory block (B) able to store the $N \times N_t$ pulse counting values delivered by the N counting circuits during the Nt successive counting durations, and
- a computer which performs the following steps:

→ computing a set of $N_R$ correlation products $R_z$ so that:

$$R_z = \prod_{i=1}^{N} M_{i,([N-i)z+1]} \quad (z=1, 2, ..., N_R)$$

→ computing a statistical mean $\bar{R}$ of the $N_t$ products $\prod_{i=1}^{N} M_{i,t}$ such that:

$$\bar{R} = \frac{1}{N_t} \sum_{t=1}^{N_t} \prod_{i=1}^{N} M_{i,t}$$

→ computing a standard deviation $\sigma(\bar{R})$ of the $N_t$ products $\prod_{i=1}^{N} M_{i,t}$,
→ computing a correlation condition for each correlation product $R_z$ so that:

if $R_z \geq \bar{R} + K_2\sigma(\bar{R})$, $K_2$ being a scalar, a radioactive source is considered to have moved in front of the detectors, and
if $R_z < \bar{R} + K_2\sigma(\bar{R})$, no source is considered to have moved in front of the detectors.

6. The device according to claim 5, wherein:

$$\text{if } R_z \geq \bar{R} + K_2\sigma(\bar{R}),$$

the computer performs a step of computing the source speed V so that:

$$V = d/(T \times \Delta t),$$

where d is the distance separating two neighbouring detectors and T is the rank t of a set of N pulse counting values for which the correlation product $R_Z$ is maximum.

7. The device according to any of claims 5 or 6, wherein:

$$\text{if } R_z \geq \bar{R} + K_2\sigma(\bar{R}),$$

the computer performs a step of computing the source intensity I so that:

$$I = \frac{1}{N} \sum_{i=1}^{N} M_{i,(N-i)T+1} - \frac{1}{N \times N_t} \sum_{t=1}^{N_t} \left[ \sum_{i=1}^{N} M_{i,t} \right]$$

FIG. 1

FIG. 2

EP 2 948 800 B1

$M_{i,t}$  $i = 1,2,\ldots,N$

$t = 1,2,\ldots,N_t$

1 ── $R_t$

2 ── $\overline{R}$

3 ── $\sigma(\overline{R})$

4

$k_2$ ──→ $R_t \geqslant \overline{R} + k_2\sigma(\overline{R})$ ── non

oui

5 ── Pas de source

6 ── V,I

# FIG. 3

FIG. 4A

FIG. 4B

EP 2 948 800 B1

EP 2 948 800 B1

FIG. 5A

FIG. 5B

FIG. 6

FIG. 7

FIG. 8

FIG. 9A

FIG. 9B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A.SUNDARESAN ; P.K.VARSHNEY ; N.S.V RAO.** Distributed detection of a nuclear radioactive source using fusion correlation decisions. *Proceeding of the International Conférence on Information Fusion,* 2007
- Quickest detection of nuclear radiation using a sensor network. **LIJUN QIAN et al.** HOMELAND SECURITY (HST), 2012 IEEE CONFERENCE ON TECHNOLOGIES FOR. IEEE, 13 Novembre 2012, 648-653

- Sensitivity Improvement In Low-Profile Distributed Detector Systems For Tracking Sources In Transit. **VILIM R B et al.** TECHNOLOGIES FOR HOMELAND SECURITY, 2007 IEEE CONFERENCE ON. IEEE, 01 Mai 2007, 174-179